# EUROPÄISCHE PATENTSCHRIFT

(11) **EP 3 901 004 B1**
(45) Veröffentlichungstag und Bekanntmachung des Hinweises auf die Patenterteilung: **31.01.2024**
(21) Anmeldenummer: 21156571.8
(22) Anmeldetag: 11.02.2021
(51) Int. Cl.: B62D 11/24, B62D 11/10, B62D 11/08

(54) **DRIFTAUSGLEICH**
DRIFT COMPENSATION
COMPENSATION DE DÉRIVE

(30) Priorität: 24.04.2020 DE 102020111246
(43) Veröffentlichungstag der Anmeldung: 27.10.2021
(73) Patentinhaber: CLAAS Tractor SAS, 78141 Vélizy-Villacoublay Cedex (FR)
(72) Erfinder: Arrouart, Cyrille, 75015 Paris (FR)
(74) Vertreter: CLAAS Gruppe

(56) Entgegenhaltungen:
- EP-A1- 3 106 368
- EP-A2- 2 930 086
- US-A- 5 307 888
- US-A- 6 141 613
- US-A1- 2010 206 127

## Beschreibung

Die Erfindung betrifft ein landwirtschaftliches Fahrzeug mit zumindest einem linken und einem rechten Raupenlaufwerk gemäß dem Oberbegriff des Anspruchs 1.

Landwirtschaftliche Fahrzeuge, wie beispielsweise Traktoren, Mähdrescher oder Feldhäcksler, werden zunehmend mit Raupenlaufwerken ausgestattet, welche eine bessere Übertragung von Zugkräften auf den Untergrund ermöglichen, sodass die Fahrzeuge leichter durch raue oder schlammige Felder bewegt werden können. Raupenlaufwerke besitzen eine hohe Aufstandsfläche, welche beispielsweise ein Raupenband aus einem elastischen Werkstoff wie Gummi aufweisen. Das Raupenlaufwerk umfasst dabei üblicherweise ein Raupenschiff, ein Triebrad, welches beispielsweise formschlüssig ein endloses Raupenband antreibt, vordere und hintere Umlenkräder sowie zwischen diesen befindliche Laufräder.

Hierbei sind die Raupenlaufwerke häufig an den Hinterachsen des landwirtschaftlichen Fahrzeugs angeordnet und die Vorderachsen mit herkömmlichen Rädern ausgestattet. Bei einem Lenkvorgang werden üblicherweise ausschließlich die Vorderräder verschwenkt um das Fahrzeug in eine gewünschte Richtung zu steuern, während die Raupenlaufwerke durch die mittels der Vorderräder generierten Lenkkräfte in eine resultierende Bahnkurve gedrückt bzw. gezogen werden. Die gegenüber herkömmlichen Rädern deutlich vergrößerte Aufstandsfläche der Raupenlaufwerke bedingt einen erheblichen Drehwiderstand der Raupenlaufwerke, welcher einer für den Lenkvorgang erforderlichen Gierbewegung des Fahrzeugs entgegenwirkt. Auf Grund des Drehwiderstands der Raupenlaufwerke entspricht die resultierende Bahnkurve nicht einer dem Lenkeinschlag entsprechenden theoretischen Bahnkurve, sodass dem Fahrer ein Führen des Fahrzeugs entlang einer gewünschten Bahnkurve erschwert wird. Mit abnehmendem Radius der Bahnkurve und niedriger Geschwindigkeit nimmt der Drehwiderstand weiter zu, sodass insbesondere beim Vorgewende auf einer landwirtschaftlichen Fläche das Führen des Fahrzeugs gegenüber mit herkömmlichen Rädern ausgestatteten Maschinen erschwert ist.

Aus dem Stand der Technik ist es für PKW bekannt die Lenkcharakteristik eines Fahrzeugs zu verändern, indem eine Antriebskraft unterschiedlich zwischen linken und rechten Rädern verteilt wird. Derartige Systeme sind allgemein unter dem Begriff ESP bekannt und dienen bei einer Kurvenfahrt der Vermeidung eines Über- oder Untersteuerns des Fahrzeugs, wobei entweder das Fahrzeugheck oder die Vorderräder auf Grund von Fliehkräften nach außen drängen. Ein solches Verhalten führt dazu, dass das Fahrzeug die durch den entsprechenden Lenkeinschlag vorgesehene theoretische Bahnkurve verlässt. Die US6064930 offenbart ein solches System zum Vermeiden eines Über- oder Untersteuerns eines Fahrzeugs, sodass die resultierende Bahnkurve des Fahrzeugs der theoretischen Bahnkurve angenähert wird. Das Dokument US 5307888 A offenbart ein Fahrzeug, umfassend: ein linkes und ein rechtes Raupenlaufwerk mit jeweils einem Raupenband zum Übertragen eines Antriebsdrehmoments auf einen Untergrund, eine Steuereinrichtung, wobei die Steuereinrichtung zur Berechnung eines Drehwiderstands der Raupenlaufwerke eingerichtet ist.

Es ist Aufgabe der Erfindung die beschriebenen Nachteile des Stands der Technik zu vermeiden und insbesondere ein landwirtschaftliches Fahrzeug zu schaffen, bei welchem die Lenkcharakteristik verbessert wird, indem ein Antriebsdrehmoment zwischen sich gegenüberliegenden linken und rechten Raupenlaufwerken derart verteilt wird, sodass ein Ausgleichsgiermoment resultiert, welches dem Driftwiderstand der Raupenlaufwerke entgegenwirkt und somit ein Führen des Fahrzeugs entlang einer dem Lenkeinschlag entsprechenden theoretischen Bahnkurve verbessert wird.

Diese Aufgabe wird erfindungsgemäß durch die kennzeichnenden Merkmale des Anspruchs 1 gelöst.

Gemäß dem Anspruch 1 wird ein landwirtschaftliches Fahrzeug vorgeschlagen. Das vorschlagsgemäße landwirtschaftliche Fahrzeug umfasst zumindest ein linkes und ein rechtes Raupenlaufwerk mit jeweils einem Raupenband zum Übertragen eines Antriebsdrehmoments auf einen Untergrund und eine Steuereinrichtung, wobei die Steuereinrichtung zur Berechnung eines Drehwiderstands der Raupenlauwerke eingerichtet ist, wobei die Steuereinrichtung ein Ausgleichsgiermoment ermittelt, welches dem Drehwiderstand der Raupenlaufwerke entgegenwirkt, wobei das landwirtschaftliche Fahrzeug ein Drehmomentverteilungsmittel aufweist, welches derart eingerichtet und ansteuerbar ist, dass dieses ein Antriebsdrehmoment zwischen dem linken und rechten Raupenlaufwerk verteilt, sodass die Raupenlaufwerke das Ausgleichsgiermoment generieren. Ein derartig ausgestaltetes landwirtschaftliches Fahrzeug ist für einen Fahrer leichter steuerbar und weist ein besseres Lenkverhalten bei einer Kurvenfahrt auf. Die Reibungskräfte zwischen einem Untergrund und den Raupenlaufwerken, welche durch den Driftwiderstand beschrieben werden, wirken der für die Kurvenfahrt erforderlichen Gierbewegung des Fahrzeugs entgegen. Es ist somit besonders vorteilhaft für das Lenkverhalten die Raupenlaufwerke derart anzusteuern, sodass diese zur Unterstützung der Gierbewegung ein Ausgleichsgiermoment erzeugen.

Erfindungsgemäß ist das Drehmomentverteilungsmittel als Ausgleichsgetriebe ausgebildet. Dies ermöglicht eine besonders einfache mechanische Aufteilung des Antriebsdrehmoments auf das linke und rechte Raupenlaufwerk.

Eine vorteilhafte Weiterbildung sieht vor, dass das landwirtschaftliche Fahrzeug ein linkes Vorderrad, ein rechtes Vorderrad und einen Lenkwinkelsensor aufweist, wobei der Lenkwinkelsensor einen Lenkwinkel zumindest eines der Vorderräder erfasst. Eine derartige Weiterbildung ermöglicht es der Steuereinrichtung den Lenkwinkel zu ermitteln, welcher besonders Hilfreich für die Berechnung des Driftwiderstands mittels der Steuereinrichtung ist. Besonders vorteilhaft ist es, wenn die Steuereinrichtung zur Berechnung einer theoretischen Bahnkurve in Abhängigkeit des Lenkwinkels eingerichtet ist. Dies ist dadurch bedingt, dass in Abhängigkeit des Lenkwinkels eine Berechnung der theoretischen Bahnkurve, welcher das Fahrzeug bzw. die Räder und Raupenlaufwerke folgen, nach der Ackermann Lenkgeometrie ermittelbar ist. Eine derartige theoretische Bahnkurve beschreibt die für einen Lenkvorgang mit möglichst geringen Drift der Räder bzw. Raupenlaufwerke optimale Bahnkurve.

In einer vorteilhaften Ausgestaltung kann die Steuereinrichtung dazu eingerichtet sein den Drehwiderstand der Raupenlaufwerke in Abhängigkeit von der theoretischen Bahnkurve und/oder einer Fahrzeuggeschwindigkeit zu berechnen, um das Ausgleichsgiermoment derart zu generieren, dass dieses dem Drehwiderstand entgegenwirkt, welcher das Fahrzeug von der theoretischen Bahnkurve abdrängt.

In einer vorteilhaften Weiterbildung der Erfindung entspricht der Betrag des Ausgleichsgiermoments im Wesentlichen dem Betrag des Widerstandsgiermoments, wobei das Ausgleichsgiermoment und das Widerstandsgiermoment um dieselbe Gierachse wirken, um ein Abweichen des Fahrzeugs von der theoretischen Bahnkurve gänzlich zu vermeiden. Besonders vorteilhaft ist es, wenn das Ausgleichsgetriebe ein linkes Planetengetriebe, ein rechtes Planetengetriebe und ein zwischen diesen angeordnetes Differentialgetriebe aufweist. Die zusätzlichen Planetengetriebe ermöglichen eine Anteilig unterschiedliche Zuordnung des Antriebsdrehmoments zu den Raupenlaufwerken um somit das Ausgleichsgiermoment zu generieren.

In einer besonders vorteilhaften Weiterbildung kann das linke Raupenlaufwerk eine linke Antriebswelle und das rechte Raupenlaufwerk eine rechte Antriebswelle aufweisen, wobei das Differentialgetriebe zum übertragen eines Antriebsdrehmoments auf die Antriebswellen des linken und rechten Raupenlaufwerks ein angetriebenes Ausgleichsgehäuse aufweist. Mittels des Ausgleichsgehäuses kann zum einen das Antriebsdrehmoment über das Differentialgetriebe zu gleichen Anteilen dem rechten und linken Raupenlaufwerk zugeführt werden, weiterhin ermöglicht das Ausgleichsgehäuse ebenfalls eine Zuführung des Antriebsdrehmoments zu den Planetengetrieben. Mittels der Planetengetriebe kann bei einer entsprechenden Ansteuerung der Steuereinrichtung den Raupenlaufwerken das Drehmoment ebenfalls anteilig unterschiedlich zugeführt werden.

In einer besonders vorteilhaften Ausgestaltung weisen das linke und rechte Planetengetriebe jeweils ein Planetenradpaar und ein erstes und zweites Sonnenrad auf, wobei das erste Sonnenrad des linken Planetengetriebes verdrehfest mit der linken Antriebswelle verbunden ist und das erste Sonnenrad des rechten Planetengetriebes verdrehfest mit der rechten Antriebswelle verbunden ist, wobei das jeweilige zweite Sonnenrad verdrehfest mit dem Ausgleichsgehäuse verbunden ist, wobei das Planetenradpaar jeweils mittels einer ersten Verzahnung, insbesondere ersten Stirnradverzahnung, mit dem jeweiligen ersten Sonnenrad und mittels einer zweiten Verzahnung, insbesondere zweiten Stirnradverzahnung, mit dem jeweiligen zweiten Sonnenrad in Wirkverbindung steht. Auf Grund dieser vorteilhaften Ausgestaltung kann das Antriebsdrehmoment von dem Ausgleichsgehäuse auf das jeweilige Planetenradpaar übertragen werden. Weiterhin wird hierdurch ebenfalls eine Übertragung des Antriebsdrehmoments über das erste Sonnenrad auf die jeweilige Antriebswelle des jeweiligen Raupenlaufwerks ermöglicht.

Besonders vorteilhaft ist es, wenn das jeweilige Planetenradpaar drehbeweglich auf jeweils einem Steg angeordnet ist, wobei der Steg des linken Planetengetriebes mit einer Vielzahl von drehbeweglich um die linke Antriebswelle angeordneten Lamellen einer linken Lamellenkupplung verbunden ist und der Steg des rechten Planetengetriebes mit einer Vielzahl von drehbeweglich um die rechte Antriebswelle angeordneten Lamellen einer rechten Lamellenkupplung verbunden ist, sodass das jeweilige Planetenradpaar in einem entkuppelten Zustand der jeweiligen Lamellenkupplung umlaufbeweglich zu dem jeweiligen ersten und zweiten Sonnenrad angeordnet ist, wobei die drehbeweglichen Lamellen der rechten und linken Lamellenkupplung kraftschlüssig verspannbar sind. Dies ist besonders vorteilhaft, da somit die Steuereinrichtung die linke oder rechte Lamellenkupplung zum Verspannen der dieser zugeordneten Lamellen ansteuern kann, um dem linken oder rechten Raupenlaufwerk ein gegenüber dem entsprechend anderen Raupenlaufwerk höheres Antriebsdrehmoment zuzuführen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Draufsicht eines landwirtschaftlichen Fahrzeugs mit Raupenlaufwerken,
- Figur 2: eine schematische Anordnung der Vorderräder und Raupenlaufwerke des landwirtschaftlichen Fahrzeugs bei einem Lenkvorgang mit einem beispielhaften Kräfteverlauf- und den daraus resultierenden Momenten,
- Figur 3: eine schematische Draufsicht eines Ausgleichsgetriebes.

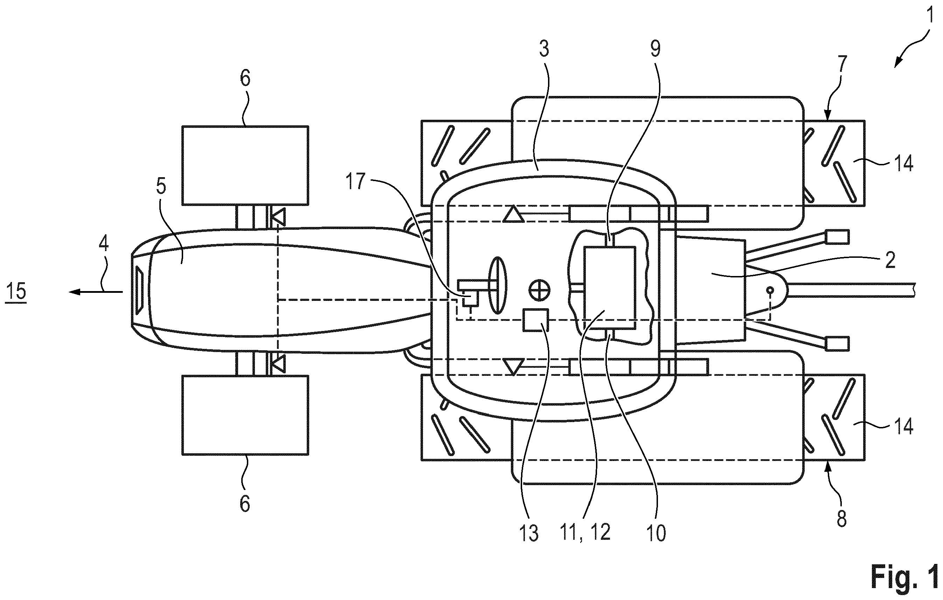

In Fig. 1 ist in einer schematischen Draufsicht ein landwirtschaftliches Fahrzeug 1 in Form eines Traktors dargestellt. Auf den Aufbau eines Traktors wird nicht detailliert eingegangen, da dieser als dem Fachmann bekannt angesehen wird. Ein landwirtschaftliches Fahrzeug 1 im Sinne der Erfindung kann auch eine selbstfahrende Erntemaschine wie ein Mähdrescher oder ein Feldhäcksler sein.

Der Traktor weist eine auf einem Fahrgestell 2 angeordnete Fahrerkabine 3 auf. In Fahrzeuglängsrichtung 4 des landwirtschaftlichen Fahrzeugs 1 ist vor der Kabine 3 ein Motorraum 5 mit einem Antriebsmotor der Arbeitsmaschine 1 angeordnet. Im vorderen Bereich des Fahrzeugs 1 ist an dem Fahrgestell 2 an jeder Seite jeweils ein lenkbares Vorderrad 6 angeordnet, wobei das in Vorwärtsfahrtrichtung linksseitig angeordnete Vorderrad 6 als linkes Vorderrad und das in Vorwärtsfahrtrichtung rechtsseitig angeordnete Vorderrad 6 als rechtes Vorderrad bezeichnet wird. An dem Fahrgestell 2 des Fahrzeugs 1 ist an jeder Seite jeweils ein Raupenlaufwerk 7, 8 angeordnet, wobei die Raupenlaufwerke 7, 8 jeweils eine Antriebswelle 9, 10 zum Übertragen eines Antriebsdrehmoments 32 auf das jeweilige Raupenlaufwerk 7, 8 aufweisen, welche über ein noch näher zu erläuterndes und als Ausgleichsgetriebe 11 ausgebildetes Drehmomentverteilungsmittel 12 antreibbar sind. Im Weiteren wird das in Vorwärtsfahrtrichtung des Fahrzeugs 1 auf der linken Seite befindliche Raupenlaufwerk 8 als linkes Raupenlaufwerk 8 und das auf der rechten Seite befindliche Raupenlaufwerk 7 als rechtes Raupenlaufwerk 7 bezeichnet. Das Ausgleichsgetriebe 11 ist zum Verteilen des durch den Antriebsmotor erzeugten Antriebsdrehmoments 32 auf die Antriebswellen 9, 10 in ebenfalls noch näher zu erläuternder Weise eingerichtet. Hierfür umfasst das Fahrzeug 1 eine Steuereinrichtung 13 die zum Ansteuern des Ausgleichsgetriebes 11 eingerichtet ist. Die Raupenlaufwerke 7, 8 sind jeweils mit einem Raupenband 14 ausgestattet, welches zur Übertragung des Antriebsdrehmoments 32 auf einen Untergrund 15 in an sich bekannter Weise ausgestaltet ist.

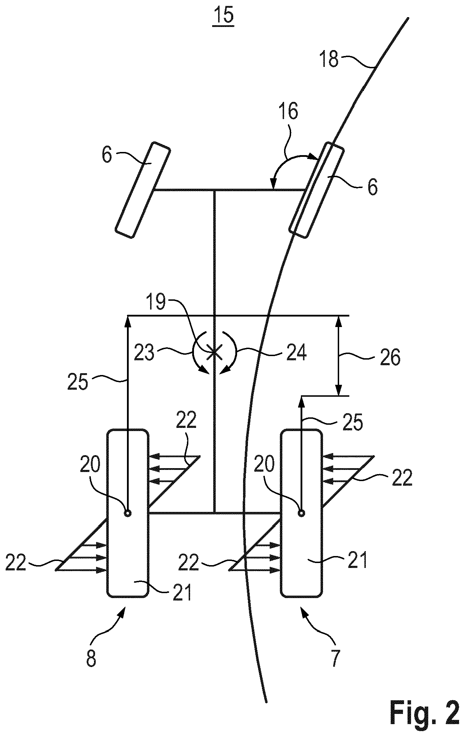

In Fig. 2 ist eine schematische Anordnung der Vorderräder 6 und Raupenlaufwerke 7, 8 des landwirtschaftlichen Fahrzeugs 1 bei einem Lenkvorgang mit einem beispielhaften Kräfteverlauf- und den daraus resultierenden Momenten dargestellt. Für den Lenkvorgang werden die Vorderräder 6 um einen Lenkwinkel 16 verschwenkt, wobei ein Lenkwinkelsensor 17 den Lenkwinkel 16 erfasst und an die Steuereinrichtung 13 übermittelt. Die Steuereinrichtung 13 ist dazu eingerichtet mittels des Lenkwinkels 16 in an sich bekannter Weise eine theoretische Bahnkurve 18, insbesondere eine theoretische Bahnkurve 18 nach der Ackermann-Lenkgeometrie, zu ermitteln, welcher das Fahrzeug 1 bzw. die Räder 6 und Raupenlaufwerke 7, 8 infolge des Lenkwinkels 16 folgen. Der Lenkvorgang führt zu einer Gierbewegung des Fahrzeugs 1, welches eine Drehbewegung des Fahrzeugs 1 um eine sich senkrecht erstreckende Gierachse 19 ist. Die Raupenlaufwerke 7, 8 drehen sich hierbei ebenfalls jeweils um eine vertikale Achse 20. Die gegenüber herkömmlichen Rädern 6 deutlich größere Aufstandsfläche 21 der Raupenlaufwerke 7, 8 wird bei dieser Drehbewegung über den Untergrund 15 gezogen bzw. geschoben. Zwischen dem Untergrund 15 und den Raupenbändern 14 entstehen Reibungskräfte, die der Drehbewegung entgegenwirken. Die der Drehbewegung der Raupenlaufwerke um dessen vertikale Achse entgegenwirkenden Reibungskräfte werden im Weiteren als Drehwiderstand 22 bezeichnet. Die Steuereinrichtung 13 ist dazu eingerichtet den Drehwiderstand 22 in Abhängigkeit von der theoretischen Bahnkurve 18 und einer Fahrzeuggeschwindigkeit zu berechnen. Auf die Berechnung eines derartigen Drehwiderstands 22 wird nicht im Detail eingegangen, da dies als dem Fachmann bekannt angesehen wird. Auf Grund des Drehwiderstands 22 wirkt ein Widerstandsgiermoment 23 um die Gierachse 19 der Gierbewegung entgegen. Das Widerstandsgiermoment 23 drängt das Fahrzeug 1 von der theoretischen Bahnkurve 18 ab. Die Steuereinrichtung 13 ist zur Berechnung des aus dem Drehwiderstand 22 resultierenden Widerstandsgiermoment 23 eingerichtet. Zur Vermeidung der Abdrängung des Fahrzeugs 1 von der theoretischen Bahnkurve 18 steuert die Steuereinrichtung 13 das Ausgleichsgetriebe 11 derart an, so dass das Ausgleichsgetriebe 11 das Antriebsdrehmoment 32 den Raupenlaufwerken 7, 8 zur Erzeugung eines Ausgleichsgiermoments 24 mit unterschiedlichen Anteilen zuführt, wobei das Ausgleichsgiermoment 24 um die Gierachse 19 des Fahrzeugs 1 dem Widerstandsgiermoment 23 entgegenwirkt. Infolge der unterschiedlichen Verteilung des Antriebsdrehmoments 32 auf die Raupenlaufwerke 7, 8 unterscheidet sich die von dem jeweiligen Raupenband 14 der Raupenlaufwerke 7, 8 auf den Untergrund 15 übertragene Antriebskraft 25 um eine Delta-Kraft 26, wodurch das Ausgleichsgiermoment 24 erzeugt wird.

Vorzugsweise entspricht das Ausgleichsgiermoment 24 dem Widerstandsgiermoment 23, sodass das Fahrzeug 1 entlang der ermittelten theoretisch Bahnkurven 18 fährt.

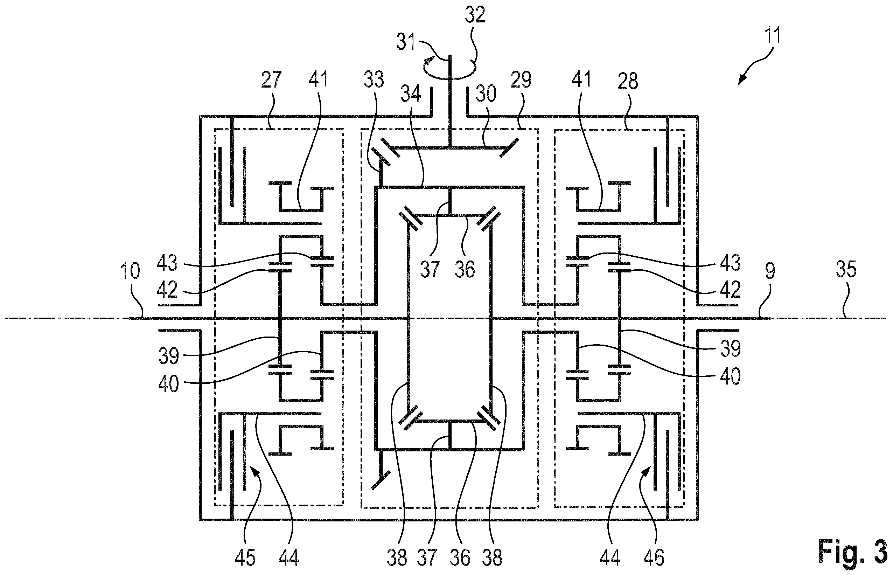

In Fig. 3 ist schematisch eine Draufsicht des Ausgleichsgetriebes 11 dargestellt. Dass Ausgleichsgetriebe 11 umfasst ein linkes Planetengetriebe 27, ein rechtes Planetengetriebe 28 und ein zwischen diesen angeordnetes Differentialgetriebe 29. Das linke Planetengetriebe 27 ist an einer dem linken Raupenlaufwerk 8 zugewandten Seite des Ausgleichsgetriebes 11 angeordnet und das rechte Planetengetriebe 28 ist an einer dem rechten Raupenlaufwerk 7 zugewandten Seite des Ausgleichsgetriebes 11 angeordnet.

Das Differentialgetriebe 29 weist ein Antriebskegelrad 30 auf, welches verdrehfest mit einer Eingangswelle 31 verbunden ist, wobei die Eingangswelle 31 von dem Motor mit einem Antriebsdrehmoment 32 beaufschlagt wird. Das Antriebskegelrad 30 treibt ein Tellerrad 33 an, welches mit einem Ausgleichsgehäuse 34 verdrehfest verbunden, beispielsweise verschraubt, ist. Das Ausgleichsgehäuse 34 ist koaxial zu einer gemeinsamen Rotationsachse 35 der Antriebswellen 9, 10 angeordnet und treibt zumindest ein Ausgleichsrad 36 an, welches mittels einer sich in Richtung der Rotationsachse 35 erstreckenden Ausgleichsräderachse 37 drehbeweglich an dem Ausgleichsgehäuse 34 angeordnet ist. Im Ausführungsbeispiel umfasst das Differentialgetriebe 11 zwei derartig ausgestaltete Ausgleichsräder 36. An den Antriebswellen 9, 10 der Raupenlaufwerke 7, 8 ist jeweils ein Antriebskegelrad 38 angeordnet, wobei die Ausgleichsräder 36 die Antriebskegelräder 38 antreiben. Das von den Ausgleichsrädern 36 auf die Antriebskegelräder 38 übertragen Antriebsdrehmoment 32 wird gleichermaßen auf die Antriebskegelräder 38 verteilt.

Um nun das Antriebsdrehmoment 32 in der zuvor beschriebenen Weise mit entsprechend unterschiedlichen Anteilen auf die Raupenlaufwerke 7, 8 übertragen zu können, weist das Ausgleichsgetriebe 11 das rechte und linke Planetengetriebe 27, 28 auf. Die Planetengetriebe 27, 28 umfassen jeweils ein erstes und ein zweites Sonnenrad 39, 40, wobei das erste Sonnenrad 39 verdrehfest mit der jeweiligen Antriebswelle 9, 10 und das jeweilige zweite Sonnenrad 40 verdrehfest mit dem Ausgleichsgehäuse 34 verbunden ist. Das linke und rechte Planetengetriebe 27, 28 weist jeweils zumindest ein Planetenradpaar 41 auf. Das jeweilige Planetenradpaar 41 des jeweiligen Planetengetriebes 27, 28 steht mit einer ersten Verzahnung 42 mit dem jeweiligen ersten Sonnenrad 39 und mit einer zweiten Verzahnung 43 mit dem jeweiligen zweiten Sonnenrad 40 in Wirkverbindung. Die Planetenradpaare 41 sind drehbeweglich auf jeweils einem sich parallel zu den Antriebswellen 9, 10 erstreckenden Steg 44 angeordnet.

Weiterhin umfasst das linke Planetengetriebe 27 eine linke Lamellenkupplung 45 und das rechte Planetengetriebe 28 eine rechte Lamellenkupplung 46 mit jeweils um die Rotationsachse 35 drehbeweglich angeordneten Lamellen. Bei einem Kupplungsvorgang der jeweiligen Lamellenkupplung 45, 46 werden die jeweiligen drehbeweglichen Lamellen kraftschlüssig verspannt, sodass eine Rotation der drehbeweglichen Lamellen um die Rotationsachse 35 gehemmt oder gestoppt wird.

Der Steg 44 des linken Planetengetriebes 27 ist mit den drehbeweglichen Lamellen der linken Lamellenkupplung 45 fest verbunden und der Steg 44 des rechten Planetengetriebes 28 mit den drehbeweglichen Lamellen der rechten Lamellenkupplung 28 fest verbunden.

In einem entkuppelten Zustand der jeweiligen Lamellenkupplung 45, 46 führen in Abhängigkeit von einer Übersetzung der ersten und zweiten Verzahnung 42, 43 unterschiedliche Drehzahlen des ersten und zweiten Sonnenrades 39, 40 dazu, dass das jeweilige Planetenradpaar 41 um das erste und zweite Sonnenrad 39, 40 umläuft, bzw. um die Rotationsachse 35 umläuft. Da im entkuppelten Zustand das jeweilige Planetenradpaar 41 ungehemmt um die Sonnenräder 39, 40 umlaufen kann, werden hierbei keine Drehmomente zwischen den jeweiligen Sonnenrädern 39, 40 und Planetenradpaaren 41 übertragen.

In einem gekuppelten Zustand der linken oder rechten Lamellenkupplung 45, 46 wird das diesem zugeordneten Planetenradpaar 41 in der Umlaufbewegung gehemmt bzw. die Umlaufbewegung gänzlich gestoppt. Dies führt zu einer Übertragung des Antriebsdrehmoments 32 von dem Ausgleichsgehäuse 34 über das in der Umlaufbewegung gehemmte bzw. gestoppte Planetenradpaar 41 auf das erste Sonnenrad 39. Hierdurch wird die linke Antriebswelle 10 und somit das linke Raupenlaufwerk 8 mittels eines Kupplungsvorgangs der linken Lamellenkupplung 45 mit einem gegenüber der rechten Antriebswelle 9 erhöhten Anteil des vom Motor bereitgestellten Antriebsdrehmoments 32 beaufschlagt. Umgekehrt gilt dies für einen Kupplungsvorgang der rechten Lamellenkupplung 46.

### Bezugszeichenliste:

| | | | |
|---|---|---|---|
| 1 | Landwirtschaftliches Fahrzeug | 34 | Ausgleichsgehäuse |
| 2 | Fahrgestell | 35 | Rotationsachse |
| 3 | Fahrerkabine | 36 | Ausgleichsrad |
| 4 | Fahrzeuglängsrichtung | 37 | Ausgleichsräderachse |
| 5 | Motorraum | 38 | Antriebskegelrad |
| 6 | Vorderrad | 39 | Erstes Sonnenrad |
| 7 | Rechtes Raupenlaufwerk | 40 | Zweites Sonnenrad |
| 8 | Linkes Raupenlaufwerk | 41 | Planetenradpaar |
| 9 | Rechte Antriebswelle | 42 | Erste Verzahnung |
| 10 | Linke Antriebswelle | 43 | Zweite Verzahnung |
| 11 | Ausgleichsgetriebe | 44 | Steg |
| 12 | Drehmomentverteilungsmittel | 45 | Linke Lamellenkupplung |
| 13 | Steuereinrichtung | 46 | Rechte Lamellenkupplung |
| 14 | Raupenband | 47 | |
| 15 | Untergrund | 48 | |
| 16 | Lenkwinkel | 49 | |
| 17 | Lenkwinkelsensor | 50 | |
| 18 | Theoretische Bahnkurve | 51 | |
| 19 | Gierachse | 52 | |
| 20 | Vertikale Achse | 53 | |
| 21 | Aufstandsfläche | 54 | |
| 22 | Drehwiderstand | 55 | |
| 23 | Widerstandsgiermoment | 56 | |
| 24 | Ausgleichsgiermoment | | |
| 25 | Antriebskraft | | |
| 26 | Delta-Kraft | | |
| 27 | Linkes Planetengetriebe | | |
| 28 | Rechtes Planetengetriebe | | |
| 29 | Differentialgetriebe | | |
| 30 | Antriebskegelrad | | |
| 31 | Eingangswelle | | |
| 32 | Antriebsdrehmoment | | |
| 33 | Tellerrad | | |

## Patentansprüche

1. Landwirtschaftliches Fahrzeug (1) zumindest umfassend:
- ein linkes und ein rechtes Raupenlaufwerk (7, 8) mit jeweils einem Raupenband (14) zum Übertragen eines Antriebsdrehmoments (32) auf einen Untergrund (15),
- eine Steuereinrichtung (13),
wobei die Steuereinrichtung (13) zur Berechnung eines Drehwiderstands (22) der Raupenlauwerke (7, 8) eingerichtet ist,
**dadurch gekennzeichnet, dass**
die Steuereinrichtung (13) ein Ausgleichsgiermoment (24) ermittelt, welches dem Drehwiderstand (22) der Raupenlaufwerke (7, 8) entgegenwirkt,
wobei das landwirtschaftliche Fahrzeug (1) ein Drehmomentverteilungsmittel (12) aufweist, welches derart eingerichtet und ansteuerbar ist, dass dieses ein Antriebsdrehmoment (32) zwischen dem linken und rechten Raupenlaufwerk (7, 8) verteilt, sodass die Raupenlaufwerke (7, 8) das Ausgleichsgiermoment (24) generieren, wobei das Drehmomentverteilungsmittel (12) als Ausgleichsgetriebe (11) ausgebildet ist.

2. Landwirtschaftliches Fahrzeug (1) nach Anspruch 1, **dadurch gekennzeichnet, dass** das landwirtschaftliche Fahrzeug (1) ein linkes Vorderrad, ein rechtes Vorderrad (6) und einen Lenkwinkelsensor (17) aufweist, wobei der Lenkwinkelsensor (17) einen Lenkwinkel (16) zumindest eines der Vorderräder (6) erfasst.

3. Landwirtschaftliches Fahrzeug (1) nach Anspruch 1 oder 2, **dadurch gekennzeichnet, dass** die Steuereinrichtung (13) zur Berechnung einer theoretischen Bahnkurve (18) in Abhängigkeit des Lenkwinkels (16) eingerichtet ist.

4. Landwirtschaftliches Fahrzeug (1) nach einem der Ansprüche 1 bis 3, **dadurch gekennzeichnet, dass** die Steuereinrichtung (13) dazu eingerichtet ist den Drehwiderstand (22) der Raupenlaufwerke (7, 8) in Abhängigkeit von der theoretischen Bahnkurve (18) und/oder einer Fahrzeuggeschwindigkeit zu berechnen.

5. Landwirtschaftliches Fahrzeug (1) nach einem der Ansprüche 1 bis 4, **dadurch gekennzeichnet, dass** der Betrag des Ausgleichsgiermoments (24) im Wesentlichen dem Betrag des Widerstandsgiermoments (23) entspricht, wobei das Ausgleichsgiermoment (24) und das Widerstandsgiermoment (23) um dieselbe Gierachse (19) wirken.

6. Landwirtschaftliches Fahrzeug (1) nach einem der Ansprüche 1 bis 5, **dadurch gekennzeichnet, dass** das Ausgleichsgetriebe (11) ein linkes Planetengetriebe (27), ein rechtes Planetengetriebe (28) und ein zwischen diesen angeordnetes Differentialgetriebe (29) aufweist.

7. Landwirtschaftliches Fahrzeug (1) nach einem der Ansprüche 1 bis 6, **dadurch gekennzeichnet, dass** das linke Raupenlaufwerk (8) eine linke Antriebswelle (10) und das rechte Raupenlaufwerk (7) eine rechte Antriebswelle (9) aufweist, wobei das Differentialgetriebe (29) zum übertragen eines Antriebsdrehmoments (32) auf die Antriebswellen (9, 10) des linken und rechten Raupenlaufwerks (7, 8) ein angetriebenes Ausgleichsgehäuse (34) aufweist.

8. Landwirtschaftliches Fahrzeug (1) nach einem der Ansprüche 1 bis 7, **dadurch gekennzeichnet, dass** das linke und rechte Planetengetriebe (27, 28) jeweils ein Planetenradpaar (41) und ein erstes und zweites Sonnenrad (39, 40) aufweisen, wobei das erste Sonnenrad (39) des linken Planetengetriebes (27) verdrehfest mit der linken Antriebswelle (10) verbunden ist und das erste Sonnenrad (39) des rechten Planetengetriebes (28) verdrehfest mit der rechten Antriebswelle (9) verbunden ist,
wobei das jeweilige zweite Sonnenrad (40) verdrehfest mit dem Ausgleichsgehäuse (34) verbunden ist,
wobei das Planetenradpaar (41) jeweils mittels einer ersten Verzahnung (42), insbesondere ersten Stirnradverzahnung, mit dem jeweiligen ersten Sonnenrad (39) und mittels einer zweiten Verzahnung (43), insbesondere zweiten Stirnradverzahnung, mit dem jeweiligen zweiten Sonnenrad (40) in Wirkverbindung steht.

9. Landwirtschaftliches Fahrzeug (1) nach einem der Ansprüche 1 bis 8, **dadurch gekennzeichnet, dass** das jeweilige Planetenradpaar (41) drehbeweglich auf jeweils einem Steg (44) angeordnet ist,
wobei der Steg (44) des linken Planetengetriebes (27) mit einer Vielzahl von drehbeweglich um die linke Antriebswelle (10) angeordneten Lamellen einer linken Lamellenkupplung (45) verbunden ist und der Steg (44) des rechten Planetengetriebes (28) mit einer Vielzahl von drehbeweglich um die rechte Antriebswelle (9) angeordneten Lamellen einer rechten Lamellenkupplung (46) verbunden ist, sodass das jeweilige Planetenradpaar (41) in einem entkuppelten Zustand umlaufbeweglich zu dem jeweiligen ersten und zweiten Sonnenrad (39, 40) angeordnet ist,
wobei die drehbeweglichen Lamellen der rechten und linken Lamellenkupplung (45, 46) kraftschlüssig verspannbar sind.

## Claims

1. Agricultural vehicle (1) comprising at least:
- a left and a right crawler track (7, 8) each having a crawler belt (14) for transmitting a drive torque (32) to a ground (15),
- a control device (13),
wherein the control device (13) is configured to calculate a rotational resistance (22) of the crawler tracks (7, 8),
**characterised in that** the control device (13) determines a compensating yaw moment (24) which counteracts the rotational resistance (22) of the crawler tracks (7, 8),
wherein the agricultural vehicle (1) has a torque distribution means (12) which is configured and controllable in such a way that it distributes a drive torque (32) between the left and right crawler tracks (7, 8) so that the crawler tracks (7, 8) generate the compensating yaw moment (24), wherein the torque distribution means (12) is designed as a compensating transmission (11).

2. Agricultural vehicle (1) according to claim 1, **characterised in that** the agricultural vehicle (1) has a left front wheel, a right front wheel (6) and a steering angle sensor (17), wherein the steering angle sensor (17) detects a steering angle (16) of at least one of the front wheels (6).

3. Agricultural vehicle (1) according to claim 1 or 2, **characterised in that** the control device (13) is configured to calculate a theoretical path curve (18) as a function of the steering angle (16).

4. Agricultural vehicle (1) according to one of claims 1 to 3, **characterised in that** the control device (13) is configured to calculate the rotational resistance (22) of the crawler tracks (7, 8) as a function of the theoretical path curve (18) and/or a vehicle speed.

5. Agricultural vehicle (1) according to one of claims 1 to 4, **characterised in that** the amount of the compensating yaw moment (24) essentially corresponds to the amount of the resisting yaw moment (23), wherein the compensating yaw moment (24) and the resisting yaw moment (23) act about the same yaw axis (19).

6. Agricultural vehicle (1) according to one of claims 1 to 5, **characterised in that** the compensating transmission (11) has a left planetary gearbox (27), a right planetary gearbox (28) and a differential gearbox (29) arranged between these.

7. Agricultural vehicle (1) according to one of claims 1 to 6, **characterised in that** the left crawler track (8) has a left drive shaft (10) and the right crawler track (7) has a right drive shaft (9), wherein the differential gearbox (29) has a driven compensating housing (34) for transmitting a drive torque (32) to the drive shafts (9, 10) of the left and right crawler tracks (7, 8).

8. Agricultural vehicle (1) according to one of claims 1 to 7, **characterised in that** the left and right planetary gearboxes (27, 28) each have a pair of planetary gears (41) and a first and second sun gear (39, 40),
wherein the first sun gear (39) of the left planetary gearbox (27) is non-rotatably connected to the left drive shaft (10) and the first sun gear (39) of the right planetary gearbox (28) is non-rotatably connected to the right drive shaft (9),
wherein the respective second sun gear (40) is non-rotatably connected to the compensating housing (34),
wherein the pair of planetary gears (41) is in each case operatively connected to the respective first sun gear (39) by means of a first toothing (42), in particular a first spur gear toothing, and to the respective second sun gear (40) by means of a second toothing (43), in particular a second spur gear toothing.

9. Agricultural vehicle (1) according to one of claims 1 to 8, **characterised in that** the respective pair of planetary gears (41) is arranged to rotate on a respective web (44), wherein the web (44) of the left planetary gearbox (27) is connected to a plurality of discs of a left disc clutch (45) arranged rotatably around the left drive shaft (10) and the web (44) of the right planetary gearbox (28) is connected to a plurality of discs of a right disc clutch (46) arranged rotatably around the right drive shaft (9), so that the respective pair of planetary gears (41) in a decoupled state is arranged to rotate relative to the respective first and second sun gears (39, 40),
wherein the rotatably movable discs of the right and left disc clutch (45, 46) can be braced in a force-fitting manner.

## Revendications

1. Véhicule agricole (1) incluant au moins :
- des trains de roulement à chenilles gauche et droit (7, 8) avec respectivement une bande de chenille (14) pour transmettre un couple d'entraînement (32) à un support (15),
- un équipement de commande (13),
l'équipement de commande (13) étant agencé pour calculer une résistance à la rotation (22) des trains de roulement à chenilles (7, 8), **caractérisé en ce que**
l'équipement de commande (13) détermine un moment de lacet de compensation (24) qui s'oppose à la résistance à la rotation (22) des trains de roulement à chenilles (7, 8),
le véhicule agricole (1) comportant un moyen de répartition de couple (12) qui est agencé et commandable de façon qu'il répartisse un couple d'entraînement (32) entre les trains de roulement à chenilles gauche et droit (7,8), de sorte que les trains de roulement à chenilles (7, 8) génèrent le moment de lacet de compensation (24), le moyen de répartition de couple (12) étant conformé en engrenage compensateur (11).

2. Véhicule agricole (1) selon la revendication 1, **caractérisé en ce que** le véhicule agricole (1) comporte une roue avant gauche, une roue avant droite (6) et un capteur d'angle de braquage (17), le capteur d'angle de braquage (17) détectant un angle de braquage (16) au moins d'une des roues avant (6) .

3. Véhicule agricole (1) selon la revendication 1 ou 2, **caractérisé en ce que** l'équipement de commande (13) est agencé pour calculer une courbe de trajectoire théorique (18) en fonction de l'angle de braquage (16).

4. Véhicule agricole (1) selon une des revendications 1 à 3, **caractérisé en ce que** l'équipement de commande (13) est agencé pour calculer la résistance à la rotation (22) des trains de roulement à chenilles (7, 8) en fonction de la courbe de trajectoire théorique (18) et/ou d'une vitesse de véhicule.

5. Véhicule agricole (1) selon une des revendications 1 à 4, **caractérisé en ce que** la valeur du moment de lacet de compensation (24) correspond sensiblement à la valeur du moment de lacet de résistance (23), le moment de lacet de compensation (24) et le moment de lacet de résistance (23) agissant autour du même axe de lacet (19).

6. Véhicule agricole (1) selon une des revendications 1 à 5, **caractérisé en ce que** l'engrenage compensateur (11) comporte un engrenage planétaire gauche (27), un engrenage planétaire droit (28) et un engrenage différentiel (29) disposé entre ceux-ci.

7. Véhicule agricole (1) selon une des revendications 1 à 6, **caractérisé en ce que** le train de roulement à chenilles gauche (8) comporte un arbre d'entraînement gauche (10), et le train de roulement à chenilles droit (7) comporte un arbre d'entraînement droit (9), l'engrenage différentiel (29) comportant, pour transmettre un couple d'entraînement (32) aux arbres d'entraînement (9, 10) des trains de roulement à chenilles gauche et droit (7, 8), un carter compensateur entraîné (34).

8. Véhicule agricole (1) selon une des revendications 1 à 7, **caractérisé en ce que** les engrenages planétaires gauche et droit (27, 28) comportent respectivement une paire de pignons planétaires (41) et des premier et deuxième pignons solaires (39, 40), le premier pignon solaire (39) de l'engrenage planétaire gauche (27) étant relié de manière solidaire en rotation à l'arbre d'entraînement gauche (10), et le premier pignon solaire (39) de l'engrenage planétaire droit (28) étant relié de manière solidaire en rotation à l'arbre d'entraînement droit (9), le deuxième pignon solaire respectif (40) étant relié de manière solidaire en rotation au carter compensateur (34),
la paire de pignons planétaires (41) étant en liaison active respectivement au moyen d'une première denture (42), en particulier d'une première denture de pignon droit, avec le premier pignon solaire respectif (39) et, au moyen d'une deuxième denture (43), en particulier d'une deuxième denture de pignon droit, avec le deuxième pignon solaire respectif (40).

9. Véhicule agricole (1) selon une des revendications 1 à 8, **caractérisé en ce que** la paire de pignons planétaires respective (41) est disposée de manière mobile en rotation sur respectivement un porte-planétaires (44),
le porte-planétaires (44) de l'engrenage planétaire gauche (27) étant relié à une pluralité de disques d'un accouplement à disques multiples gauche (45) disposés de manière mobile en rotation autour de l'arbre d'entraînement gauche (10), et le porte-planétaires (44) de l'engrenage planétaire droit (28) étant relié à une pluralité de disques d'un accouplement à disques multiples droit (46) disposés de manière mobile en rotation autour de l'arbre d'entraînement droit (9), de sorte que la paire de pignons planétaires respective (41), dans un état désaccouplé, est disposée de manière mobile en rotation par rapport aux premier et deuxième pignons solaires respectifs (39, 40),
les disques mobiles en rotation des accouplements à disques multiples droit et gauche (45, 46) étant comprimés par conjugaison de forces.
